# EUROPEAN PATENT SPECIFICATION

(11) **EP 3 380 848 B1**
(45) Date of publication and mention of the grant of the patent: **15.03.2023**
(21) Application number: 16809299.7
(22) Date of filing: 25.11.2016
(51) Int. Cl.: G01P 3/489, B60T 8/171, G01D 5/245

(54) **WHEEL SPEED SENSOR AND WHEEL SPEED SENSING SYSTEM**
RADDREHZAHLSENSOR UND RADDREHZAHLERFASSUNGSSYSTEM
CAPTEUR DE VITESSE DE ROUE ET SYSTÈME DE DÉTECTION DE VITESSE DE ROUE

(30) Priority: 25.11.2015 US 201514951873
(43) Date of publication of application: 03.10.2018
(73) Proprietor: Continental Automotive Technologies GmbH, 30165 Hannover (DE)
(72) Inventor: ENDRES, Ralf, 64521 Groß-Gerau (DE)
(74) Representative: Continental Corporation
(86) International application number: PCT/EP2016/078847
(87) International publication number: WO 2017/089561

(56) References cited:
- WO-A2-2016/023769
- US-A- 5 019 773
- US-A1- 2004 249 544
- US-A1- 2007 256 313
- US-A1- 2014 176 125

## Description

The invention relates to a wheel speed sensor, comprising:
- an encoder wheel having a number of poles or pole pairs,
- a sensing unit for sensing a signal dependant on a rotation angle of the encoder wheel, and
- a sending unit being connected with the sensing unit,
- wherein the sending unit is configured to send data packets of a first type that are indicative for a respective pole transition at the sensing unit,

The invention relates further to a wheel speed sensing system comprising such a wheel speed sensor.

Known wheel speed sensors provide for a certain resolution regarding wheel speed and a corresponding distance travelled by a vehicle due to rotation of a wheel. For example, typical prior art wheel speed sensors provide for a resolution of about 2 cm. While this resolution is typically sufficient for normal cruise velocities, it has been found out that a higher resolution would be desirable for low-speed driving assistance functions like automated parking.

A critical parameter for the resolution of such a wheel speed sensor is the number of poles. In principle, the resolution could be increased by increasing the number of pole pairs. However, the inventor of the present invention has found out that this approach brings a plethora of new problems.

The repeatability performance (jitter) of a wheel speed sensor element is directly linked to the bandwidth of the encoder signal. With a pure doubling or other increase of the number of encoder pole pairs and with that of the signal frequency future jitter requirements cannot be fulfilled any more. In addition, a doubling of the number of encoder pole pairs corresponds to a loss of encoder magnetic field strength by the factor of 7.4 and with that a loss of magnetic air gap performance of the sensor elements. Furthermore, there is a need of a matching between encoder pitch and sensing unit pitch. All currently used sensing units would not be applicable for such a solution.

It is thus an object of the present invention to provide for an alternative wheel speed sensor that is especially suitable for a higher resolution. It is a further object of the present invention to provide for a wheel speed sensing system comprising such a wheel speed sensor.

This is solved by a wheel speed sensor according to claim 1 and a wheel speed sensing system according to claim 10. Preferred embodiments can, for example, be derived from the dependent claims.

The invention comprises a wheel speed sensor. The wheel speed sensor comprises an encoder wheel having a number of poles or pole pairs. The wheel speed sensor comprises a sensing unit for sensing a signal dependent on a rotation angle of the encoder wheel. It is noted that the encoder wheel is typically mounted or adapted to be mounted on an axle or wheel mount such that it rotates identically to at least one wheel.

The wheel speed sensor further comprises a sending unit being connected with the sensing unit, wherein the sending unit is configured to send data packets of a first type that are indicative for a respective pole transition at the sensing unit. The data packets can also be denoted as speed pulses or the sending unit can also be configured to send speed pulses. Thus, an external entity, for example an electronic control unit (ECU) to which the data packets may be sent, is aware of each pole transition. As the angular distance between consecutive poles is known, the ECU can easily calculate a wheel speed out of the time distances between consecutive data packets.

According to the invention, the sending unit is further configured to send data packets of a second type that are indicative for an amplitude of the signal.

With the data packets of the second type, the amplitude can be communicated to the external entity that gives a very accurate indication for any small rotation of the encoder wheel between two pole transitions. This allows for a significantly increased resolution while avoiding the problems discussed above.

Preferably, data packets of the second type are sent if a vehicle speed is below a threshold, and data packets of the first type are sent if the vehicle speed is above the threshold. This allows for prior art operation at high speeds and increased resolution according to the invention at low speed, e.g. during a parking operation.

According to a preferred embodiment, the poles are magnet poles.

This has been proven suitable for typical applications. In that case, the sensing unit can preferably be a magnetic sensing unit, e.g. a coil. However, it should be noted that alternatively also other poles can be used, for example based on optical recognition.

Preferably, the data packets of the first type contain information about a distance between the encoder wheel and the sensing unit. This allows for error recognition, e.g. if the distance is out of a certain range. The distance can typically be measured by the wheel speed sensor in a manner known to a person skilled in the art.

Preferably, the sending unit sends the data packets to an electronic control unit (ECU). The electronic control unit can typically calculate a wheel speed and/or a vehicle speed and/or a vehicle displacement out of the received data packets. Preferably, each data packet contains a bit indicating if the data packet is of the first type or of the second type. This allows an external entity, e.g. an ECU, to quickly identify the type of the packet.

Preferably, the data packets contain a number of bits, preferably three bits, that are indicative for a distance between the encoder wheel and the sensing unit if the data packet is of the first type, and that are indicative for the amplitude if the data packet is of the second type. Prior art wheel sensors typically use three bits to indicate the distance. Especially these bits can be used to indicate the amplitude, as a surveillance of the distance can be interrupted at low speed without arising security concerns. It should be noted that any other number of bits can be used, e.g. two bits, four bits or five bits, especially depending on the required resolution.

Preferably, the sending unit is configured to send a data packet at least after a predetermined time period, preferably 150 ms. This allows for a constant surveillance of wheel speed, vehicle speed and/or vehicle displacement, especially at low speed where data packets triggered by pole transitions would typically be sent at larger intervals. However, also other time periods can be used, e.g. between 100 and 200 ms, between 120 and 180 ms, or 100 ms, 50 ms or 250 ms.

According to an embodiment, the amplitude is encoded in the data packets of the second type using equidistant voltage values. This allows for an easy implementation.

According to an alternative, the amplitude is encoded in the data packets of the second type using voltage values corresponding to equidistant time values. Such voltage values can especially correspond to equidistant time values when the encoder wheel is rotated with a constant angular speed. This allows for a higher resolution at critical signal parts.

The invention relates further to a wheel speed sensing system. The wheel speed sensing system comprises an inventive wheel speed sensor. All embodiments and variations covered by the claims can be applied.

The wheel speed sensing system further comprises an electronic control unit (ECU) communicatively coupled to the sending unit of the wheel speed sensor. The electronic control unit is configured to calculate a wheel speed, vehicle speed or vehicle displacement from the data packets of the first type and from the data packets of the second type.

With the inventive wheel speed sensing system, the advantages of an inventive wheel speed sensor discussed above can be applied for a wheel speed sensing system.

This application especially describes a smart solution for applications with high spatial resolution requirements. The content of the existing standardized serial data protocol can be modified. With the serial data protocol additional data beside the speed pulse information can be sent to the electronic control unit (ECU). The data bit content can be divided into mandatory data bits which meaning are not to be changed and free assignable bits. A possible current standard content of the serial data protocol is shown in the following table 1:

**Table 1**

| Bit0 | Bit1 | Bit2 | Bit3 | Bit4 | Bit5 | Bit6 | Bit7 | Bit8 |
|---|---|---|---|---|---|---|---|---|
| ERR | M | EC | GDR | DR | LM0 | LM1 | LM2 | P |

A new method for providing a high resolution signal to the ECU can be based on the fact that the bits 5, 6 and 7 provide information of the sensor internal bridge signal BS[0], BS [1] and BS[2] to the ECU at low vehicle speed as shown in the following table 2:

**Table 2**

| Bit0 | Bit1 | Bit2 | Bit3 | Bit4 | Bit5 | Bit6 | Bit7 | Bit8 |
|---|---|---|---|---|---|---|---|---|
| ERR | M | LS | GDR | DR | BS0 | BS1 | BS2 | P |

The abbreviations mean:
- ERR:: Error indicating bit
- M:: Mode bit
- EC:: Bit indicating activation of error correction
- LS:: Bit indicating packet of first or second type
- GDR:: Bit indicating validity of angular direction
- DR:: Bit indication angular direction
- LM:: Bits indicating distance between encoder wheel and sensing unit
- BS:: Bits indicating amplitude
- P:: Parity bit

According to an implementation, bit 2 ('LS') can indicate if the content of the bits 5, 6 and 7 is the measured air gap at medium and high vehicle speed (LM='0') or if the content of the bits 5, 6 and 7 is the 3-bit digitalized bridge voltage (LM='1'), that is typically indicative for the amplitude.

The advantage compared to the existing state-of-the-art serial data protocol is that the current value of the bridge signal is provided to the ECU more frequently and with that the ECU has a finer grid of data points for speed and length calculation available. As a variation, the time interval between two standstill protocols can be decreased, especially with respect to the prior art common value of 150 ms.

Further details and advantages will be apparent from the enclosed drawing and the following description of an embodiment.
Figure 1 shows a wheel speed sensing system.
Figure 2 shows a first possible distribution of voltage levels.
Figure 3 shows a second possible transmission of data packets.

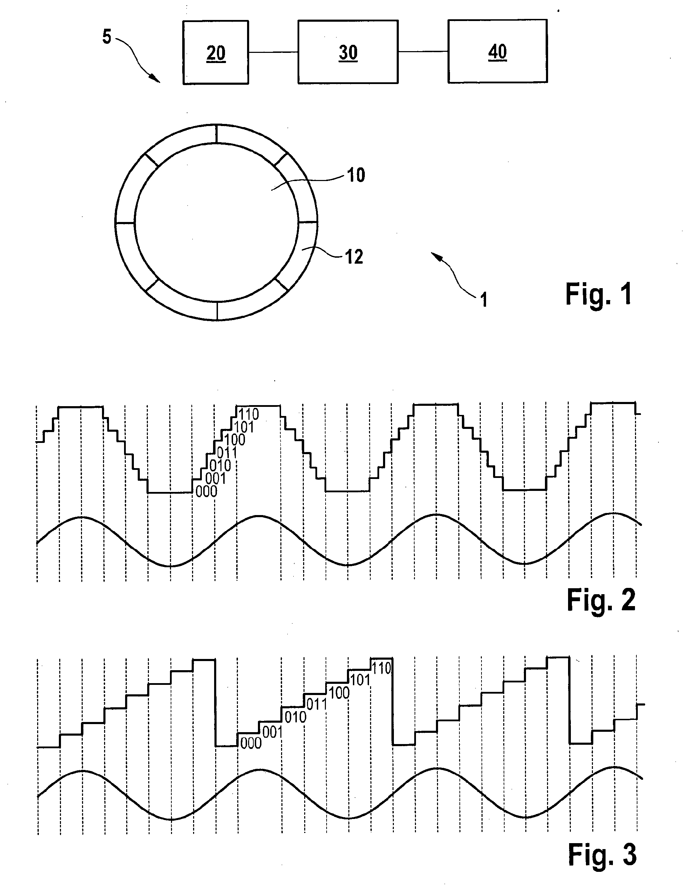

Figure 1 shows schematically a wheel speed sensing system 1 according to an embodiment of the invention.

The wheel speed sensing system 1 comprises a wheel speed sensor 5 according to an embodiment of the invention.

The wheel speed sensor 5 comprises an encoder wheel 10. The encoder wheel comprises a total of eight magnetic poles 12 that are equally distributed around its surface.

The wheel speed sensor comprises a sensing unit 20 that is assigned to the encoder wheel 10. The sensing unit 20 comprises a coil in which a voltage is induced responsive to angular movement of the poles 12.

The wheel speed sensor 5 comprises a sending unit 30. The sending unit 30 is connected to the sensing unit 20 and is thus aware of a signal sensed by the sensing unit 20 in response to angular movement and/or angular orientation of the encoder wheel 10.

The sending unit 30 generates data packets in response to the signal. The signal is evaluated by the sending unit 30 for determination if a vehicle speed is above or below a threshold.

If the vehicle speed is above the threshold, the sending unit 30 generates data packets of a first type at each pole transition of the encoder wheel 10, i.e. every time when a pole 12 is in a certain orientation with respect to the sensing unit 20, especially just below the sensing unit 20. These data packets of the first type are organized as shown in table 1 in this application. Especially, they contain bits indicating a distance between the encoder wheel 10 and the sensing unit 20. Each data packet indicated a pole transition, so that a wheel speed, vehicle speed or vehicle displacement can be easily calculated.

If the vehicle speed is below the threshold, the sending unit 30 generates data packets of a second type at a predetermined time interval. For example, a time interval of 50 ms can be used. These data packets of the second type are organized as shown in table 2 in this application. Especially, they contain bits indicating the current amplitude of the signal measured at the sensing unit 20.

The wheel speed sensing system 1 further comprises an electronic control unit 40 that is connected with the sending unit 30. The sending unit 30 sends the data packets just described to the electronic control unit 40. The electronic control unit 40 can use these data packets to calculate wheel speed, vehicle speed or vehicle displacement at high speeds using packets of the first type and at low speeds using packets of the second type.

Figures 2 and 3 show two approaches of converting a sensor unit or sensor element internal bridge signal into a 3-bit code. The respective lower part of the figures shows an internal bridge signal, whereas the respective upper part of the figures shows a digitized signal with corresponding 3-bit codes.

In figure 2 an approach of dividing the signal amplitude into eight equivalent zones is shown.

The advantage of this approach is that the implementation into an application specific integrated circuit (ASIC) is not difficult. The disadvantage is the non-linearity especially in the signal minimum/maximum region.

In figure 3 an approach of dividing the encoder period into eight equivalent zones is shown. Fig. 3 does not represent the current amplitude of the signal measured at the sensing unit according to the wheel speed sensor of claim 1.

The advantage of this approach is the linearity of the digital signal. The disadvantage is the higher implementation effort together with the need of a direction detection algorithm.

Both approaches are fully compliant with today's encoder wheels and ECU hardware. An ECU software adaptation is typically necessary for both variants. Since these approaches cooperate with sensor elements based on digital logic the new functions can be enabled and disabled based on the target application. So the sensor elements can be used for every upcoming application and no new sensor elements for low volume applications need to be developed.

## Claims

1. Wheel speed sensor, comprising
- an encoder wheel having a number of poles,
- a sensing unit for sensing a signal dependant on a rotation angle of the encoder wheel, and
- a sending unit being connected with the sensing unit,
- wherein the sending unit is configured to send data packets of a first type that are indicative for a respective pole transition at the sensing unit,
wherein
- the sending unit is further configured to send data packets of a second type at a predetermined time interval, that are indicative for an amplitude of the signal, if the vehicle speed is below a threshold,
**characterized in that**
- the data packets contain a number of bits, that are indicative for a distance between the encoder wheel and the sensing unit, if the data packet is of the first type, and that are indicative for the amplitude if the data packet is of the second type,
- the data packets of the second type contain bits indicating the current amplitude of the signal measured at the sensing unit.

2. Wheel speed sensor according to claim 1, **characterized in that**
- the poles are magnet poles.

3. Wheel speed sensor according to one of the preceding claims,
**characterized in that** it is configured that the sending unit sends the data packets to an electronic control unit (ECU).

4. Wheel speed sensor according to one of the preceding claims, **characterized in that**
- each data packet contains a bit indicating if the data packet is of the first type or of the second type.

5. Wheel speed sensor according to one of the preceding claims, **characterized in that**
- the amplitude is encoded in the data packets of the second type using equidistant voltage values.

6. Wheel speed sensing system, comprising
- a wheel speed sensor according to one of the preceding claims, and
- an electronic control unit (ECU) communicatively coupled to the sending unit of the wheel speed sensor,
- wherein the electronic control unit is configured to calculate a wheel speed, vehicle speed or vehicle displacement from the data packets of the first type and from the data packets of the second type.

## Patentansprüche

1. Raddrehzahlsensor, umfassend
- ein Codierrad mit mehreren Polen,
- eine Erfassungseinheit zum Erfassen eines Signals, das von einem Drehwinkel des Codierrads abhängig ist, und
- eine Sendeeinheit, die mit der Sensoreinheit verbunden ist,
- wobei die Sendeeinheit dazu ausgebildet ist, Datenpakete eines ersten Typs zu senden, die einen jeweiligen Polübergang bei der Erfassungseinheit anzeigen,
wobei
- die Sendeeinheit ferner dazu ausgebildet ist, Datenpakete eines zweiten Typs in einem vorbestimmten Zeitintervall zu senden, die eine Amplitude des Signals anzeigen, wenn die Fahrzeuggeschwindigkeit unterhalb eines Schwellenwerts liegt,
**dadurch gekennzeichnet, dass**
- die Datenpakete eine Anzahl von Bits enthalten, die einen Abstand zwischen dem Codierrad und der Sensoreinheit anzeigen, wenn das Datenpaket vom ersten Typ ist, und die die Amplitude anzeigen, wenn das Datenpaket vom zweiten Typ ist,
- die Datenpakete des zweiten Typs Bits enthalten, die die aktuelle Amplitude des von der Sensoreinheit gemessenen Signals angeben.

2. Raddrehzahlsensor nach Anspruch 1,
**dadurch gekennzeichnet, dass**
- die Pole Magnetpole sind.

3. Raddrehzahlsensor nach einem der vorhergehenden Ansprüche,
**dadurch gekennzeichnet, dass** er so ausgebildet ist, dass die Sendeeinheit die Datenpakete an eine elektronische Steuereinheit (ECU) sendet.

4. Raddrehzahlsensor nach einem der vorhergehenden Ansprüche,
**dadurch gekennzeichnet, dass**
- jedes Datenpaket ein Bit enthält, das angibt, ob das Datenpaket vom ersten Typ oder vom zweiten Typ ist.

5. Raddrehzahlsensor nach einem der vorhergehenden Ansprüche,
**dadurch gekennzeichnet, dass**
- die Amplitude in den Datenpaketen des zweiten Typs mit äquidistanten Spannungswerten codiert ist.

6. Raddrehzahlerfassungssystem, umfassend
- einen Raddrehzahlsensor nach einem der vorhergehenden Ansprüche, und
- eine elektronische Steuereinheit (ECU), die kommunikativ mit der Sendeeinheit des Raddrehzahlsensors gekoppelt ist,
- wobei die elektronische Steuereinheit dazu ausgebildet ist, aus den Datenpaketen des ersten Typs und aus den Datenpaketen des zweiten Typs eine Raddrehzahl, eine Fahrzeuggeschwindigkeit oder eine Fahrzeugbewegung zu berechnen.

## Revendications

1. Capteur de vitesse de roue, comprenant
- une roue de codage ayant un certain nombre de pôles,
- une unité de détection pour détecter un signal dépendant d'un angle de rotation de la roue de codage, et
- une unité d'envoi connectée à l'unité de détection, l'unité d'envoi étant configurée pour envoyer des paquets de données d'un premier type qui sont indicatives d'une transition entre pôles respectifs au niveau de l'unité de détection,
dans lequel
- l'unité d'envoi est en outre configurée pour envoyer des paquets de données d'un second type à un intervalle de temps prédéterminé, qui sont indicatives d'une amplitude du signal, si la vitesse du véhicule est inférieure à un seuil,
**caractérisé en ce que**
- les paquets de données contiennent un certain nombre de bits, qui sont indicatifs d'une distance entre la roue de codage et l'unité de détection, si le paquet de données est du premier type, et qui sont indicatifs de l'amplitude si le paquet de données est du second type,
- les paquets de données du second type contiennent des bits indiquant l'amplitude courante du signal mesurée au niveau de l'unité de détection.

2. Capteur de vitesse de roue selon la revendication 1,
**caractérisé en ce que**
- les pôles sont des pôles magnétiques.

3. Capteur de vitesse de roue selon l'une des revendications précédentes,
**caractérisé en ce qu'**
il est configuré de telle sorte que l'unité d'envoi envoie les paquets de données à une unité de commande électronique (ECU).

4. Capteur de vitesse de roue selon l'une des revendications précédentes,
**caractérisé en ce que**
- chaque paquet de données contient un bit indiquant si le paquet de données est du premier type ou du second type.

5. Capteur de vitesse de roue selon l'une des revendications précédentes, **caractérisé en ce que**
- l'amplitude est codée dans les paquets de données du second type au moyen de valeurs de tension équidistantes.

6. Système de détection de vitesse de roue, comprenant
- un capteur de vitesse de roue selon l'une des revendications précédentes,
et
- une unité de commande électronique (ECU) couplée en communication avec l'unité d'envoi du capteur de vitesse de roue,
l'unité de commande électronique étant configurée pour calculer une vitesse de roue, une vitesse de véhicule ou un déplacement de véhicule à partir des paquets de données du premier type et des paquets de données du second type.
